# EUROPEAN PATENT SPECIFICATION

(11) **EP 0 484 585 B1**
(45) Date of publication and mention of the grant of the patent: **28.07.1993**
(21) Application number: 90121459.3
(22) Date of filing: 09.11.1990
(51) Int. Cl.: B64D 17/02

(54) **Paraglider**
Gleitschirm
Parachute planeur

(43) Date of publication of application: 13.05.1992
(73) Proprietor: FALHAWK CO., LTD., Toshima-ku, Tokyo (JP)
(72) Inventor: Ogawa, Takahisa, Urawa-shi, Saitama (JP)
(74) Representative: Patentanwälte Dr. Solf & Zapf

(56) References cited:
- DE-U- 9 015 289
- FR-A- 2 648 427
- US-A- 4 015 801

## Description

### BACKGROUND OF THE INVENTION

### (Field of the Invention)

The present invention relates to a paraglider which is for gliding in the air and has a wing which is made of a cloth and into which the air is taken through air intake ports to inflate the wing to a proper wing-like form.

### (Description of the Prior Art)

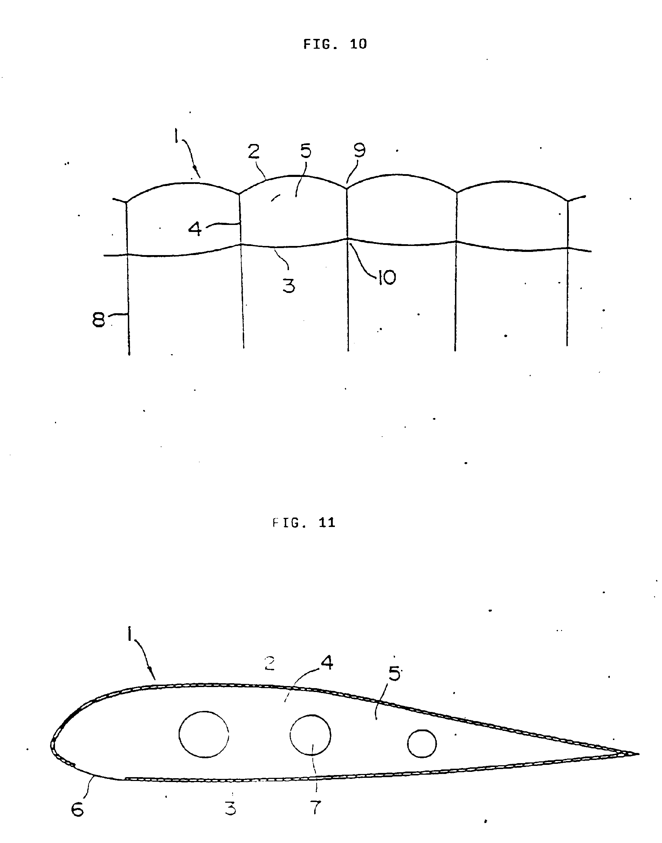

Fig. 10 is a longitudinally sectional view of a part of a wing 1 of a conventional paraglider. Fig. 11 is a cross-sectional view of the wing 1. The wing 1 is made of a cloth of synthetic fibers as a whole, and includes an upper side 2, a lower side 3, a plurality of ribs 4 provided between the upper and the lower sides and extending from one of the sides to the other, a plurality of wing chambers 5 defined among the upper and the lower sides and the ribs, and air intake ports provided at the font ends of the wing chambers. Each of the ribs 4 has air passage holes 7 through which the mutually adjacent wing chambers 5 communicate with each other. As shown in Fig. 11, each of the ribs 4 has a wing-like form for applying a lift to the wing 1. In other words, each of the ribs 4 has a streamline form slightly convex upward so that the wing chambers 5 generate the wing-like form when air is taken into the chambers through the air intake ports 6. Suspension lines 8 are coupled at the upper ends thereof to the bottoms of the ribs 4, and coupled at the lower ends of the lines to the operator of the paraglider through a fitting belt or the like, which is not shown in the drawings. Although the paraglider is of the type in which the suspension lines 8 are coupled to all the ribs 4, there is a paraglider of the other type in which a suspension line is coupled to every other rib. The paraglider of the latter type is used more often than that of the former type.

Since the upper and lower sides 2 and 3 of the conventional paraglider are curved convexly upward and downward, respectively, between the ribs 4 at the time of the inflation of the wing 1, a recess 9 is formed in the upper side 2 at the top of the rib and a recess 10 is formed in the lower side 3 at the bottom of the rib, as shown in Fig. 10. Since the ribs 4 are pulled down relative to the other portions of the wing 1 by the suspension lines 8, the recess 9 of the upper side 2 is larger than that 10 of the lower side 3. Because of the recesses 9 and 10, the form of the surface of the wing 1 is unsmooth to make the flow of air on the wing unsmooth. For that reason, the decrease in the lift to the wing 1, the increase in the resistance thereto, the deterioration of the glide ratio of the paraglider, the increase in the dynamic deformation of the wing 1 and so forth are caused to lower the flying performance of the paraglider. This is a problem. Since the distance between the suspension lines of the paraglider of the latter type in which the suspension line is coupled to every other rib is larger than that in the paraglider of the former type, the ribs coupled to the suspension lines are pulled down relative to the other portions of the wing of the paraglider of the latter type more than that in the paraglider of the former type to make the recess of the upper side of the wing of the paraglider of the latter type larger than that in the paraglider of the former type to deteriorate the flying performance of the paraglider of the latter type more than that of the paraglider of the former type.

### SUMMARY OF THE INVENTION

The present invention was made in order to solve the problem mentioned above. Accordingly, it is an object of the present invention to provide a paraglider, the surface of the wing of which is flattened to achieve the increase in the lift to the wing, the decrease in the resistance thereto, the improvement of the paraglider, the decrease in the dynamic deformation of the wing and so forth so as to enhance the flying performance of the paraglider much more than that of the conventional paraglider.

The paraglider provided in accordance with the present invention includes the wing made of sheet material and having an upper side, a lower side, a plurality of ribs provided between the upper and the lower sides and extending from one of them to the other, a plurality of wing chambers defined amoung the upper and the lower sides and the ribs, and air intake ports opened into the chambers at the front ends thereof; and suspension lines coupled to some or all of the ribs. The paraglider also includes means for coverring recesses made in the upper side or/and the lower side and extending in the front-to-rear direction of the wing. The covering means invludes one or more wing flatteners made of sheet material and attached to the upper side and/or the lower side of the wing so as to cover the recesses.

When the paraglider provided in accordance with the present invention flies, air is taken into the wing chambers through the air intake ports to inflate the chambers to spread the wing in a arc-shaped state as a whole. At that time, since a force acts to the wing because of the flow of air thereon so as to spread the wing more, the wing flattener is pulled toward both the ends thereof by the upper side or/and the lower side so that the flattener is stretched along the recesses of the upper side or/and the lower side to flatten the surface of the wing.

### BRIEF DESCRIPTION OF THE DRAWINGS

In the accompanying drawings:
Fig. 1 is a longitudinally sectional view of a part of the wing of a paraglider which is an embodiment of the present invention;
Fig. 2 is a front view of the paraglider;
Fig. 3 is a plan view of the paraglider;
Fig. 4 is a side view of the paraglider;
Fig. 5 is a perspective view of the front edge of the wing and the vicinity thereof;
Fig. 6 is a cross-sectional view of the wing;
Fig. 7 is a longitudinally sectional view of a part of the wing of a paraglider which is another embodiment of the present invention;
Fig. 8 is a longitudinally sectional view of a part of the wing of a paraglider which is yet another embodiment of the present invention;
Fig. 9 is a plan view of a part of the wing shown in Fig. 8;
Fig. 10 is a longitudinally sectional view of a part of the wing of a conventional paraglider; and
Fig. 11 is a cross-sectional view of the wing of the conventional paraglider.

### PREFERRED EMBODIMENTS OF THE PRESENT INVENTION

Embodiments of the present invention are hereinafter described in detail with reference to the drawings attached hereto.

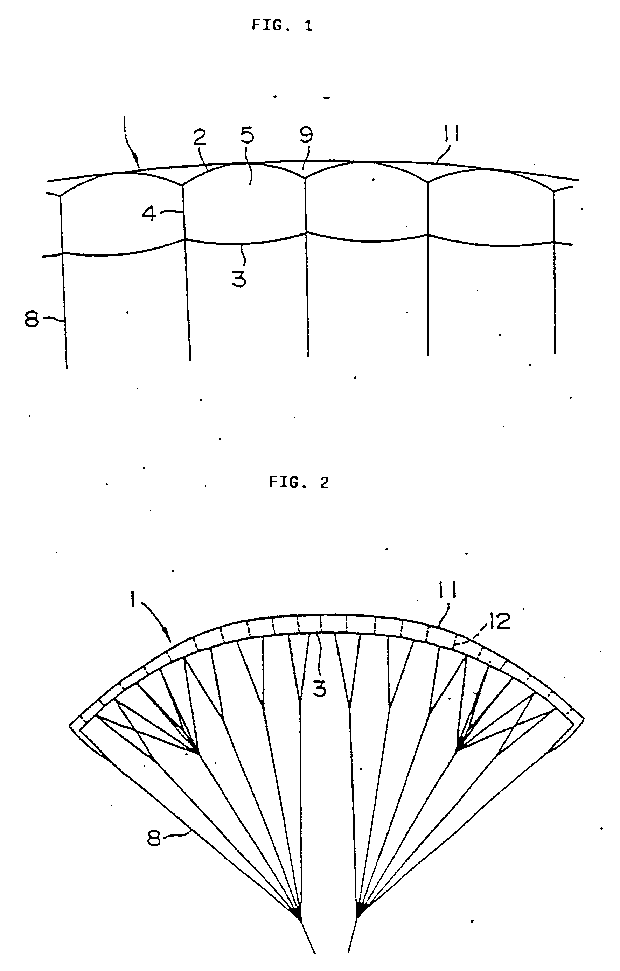

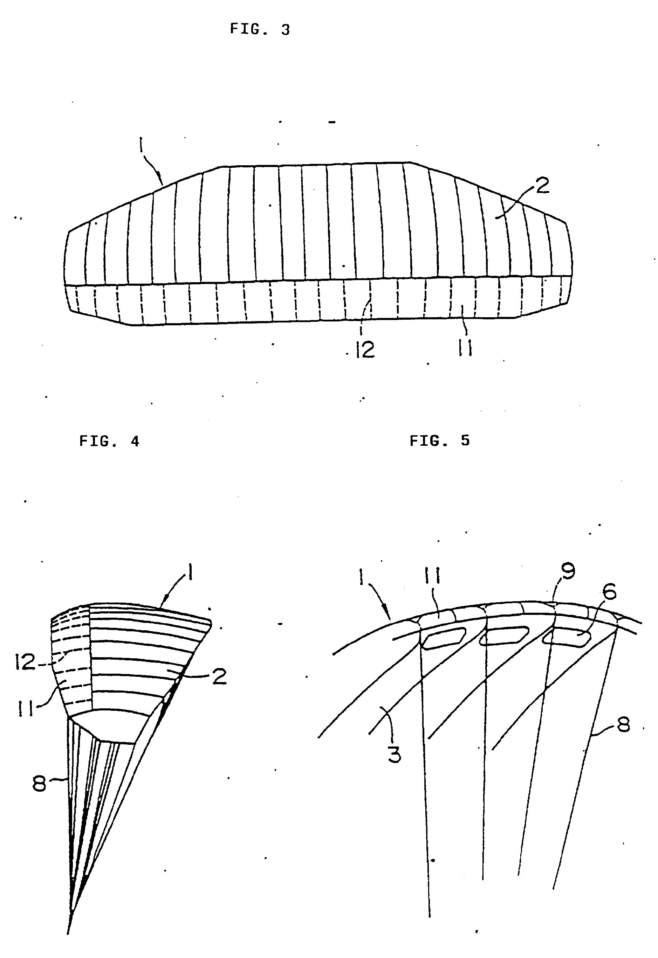

Figs. 1, 2, 3, 4, 5 and 6 show a paraglider which is one of the embodiments. A wing flattener 11 nearly shaped as a band and made of a cloth of synthetic fibers is sewn to the wing 1 of the paraglider at and near the front edge of the upper side 2 of the wing along the total length thereof as follows:
(a) Some mutually sewn portions of the wing 1 and the wing flattener 11 are the parts of the upper side 2 of the wing at the middle of the distance between the mutually adjacent ribs 4 of the wing and the corresponding parts of the flattener, and are shown by dotted lines 12 in Fig. 3.
(b) Other mutually sewn portions of the wing 1 and the wing flattener 11 are the parts of the wing at the right and left ends thereof and the parts of the flattener at the right and left ends thereof.
(c) Yet other mutually sewn portions of the wing 1 and the wing flattener 11 are the parts of the upper side 2 of the wing near the front edge of the lower side 3 thereof and the parts of the flattener at the front edge thereof.
(d) Yet other mutually sewn portions of the wing flattener 11 and the wing 1 are the parts of the flattener at the rear edge thereof and the corresponding parts of the upper side 2 of the wing.

The paraglider is the same in the other part of the constitution as the conventional paraglider shown in Figs. 10 and 11.

The operation of the paraglider which is the embodiment is described from now on. When the paraglider flies, air is taken into the wing chambers 5 of the wing 1 through air intake ports 6 so that the chambers are inflated and the wing is spread in an arc-shaped state as a whole. At that time, since a force acts to the wing 1 because of the flow of air thereon so as to spread the wing more, the wing flattener 11 is pulled toward the right and left ends thereof by the upper side 2 of the wing. Since the wing flattener 11 is sewn to the wing 1 at the portions (a), (b), (c) and (d) of them so that the flattener covers the recesses 9 of the upper side 2 of the wing, the flattener is stretched along the recesses because of the above-mentioned pulling or the flattener toward the right and left ends thereof by the upper side 2 so that the flattener is separated upward from the tops of the ribs 4 pulled down by the suspension lines 8 of the paraglider, and the surface of the wing is thus flattened at the place of the flattener, as shown in Fig. 1. As a result, the flow of the air on the upper side 2 of the wing 1 is smoothed to achieve the increase in the lift to the wing, the decrease in the resistance thereto, the improvement of the glide ratio of the paraglider, the decrease in the dynamic deformation of the wing and so forth to enhance the flying performance of the paraglider.

Although the wing flattener 11 is provided only at and near the front edge of the upper side 2 of the wing 1 in the embodiment, the flattener may be provided at the other portion of the upper side or at the whole upper side. The wing flattener 11 may also be provided at not only the upper side 2 but also the lower side 3, or at only the lower side.

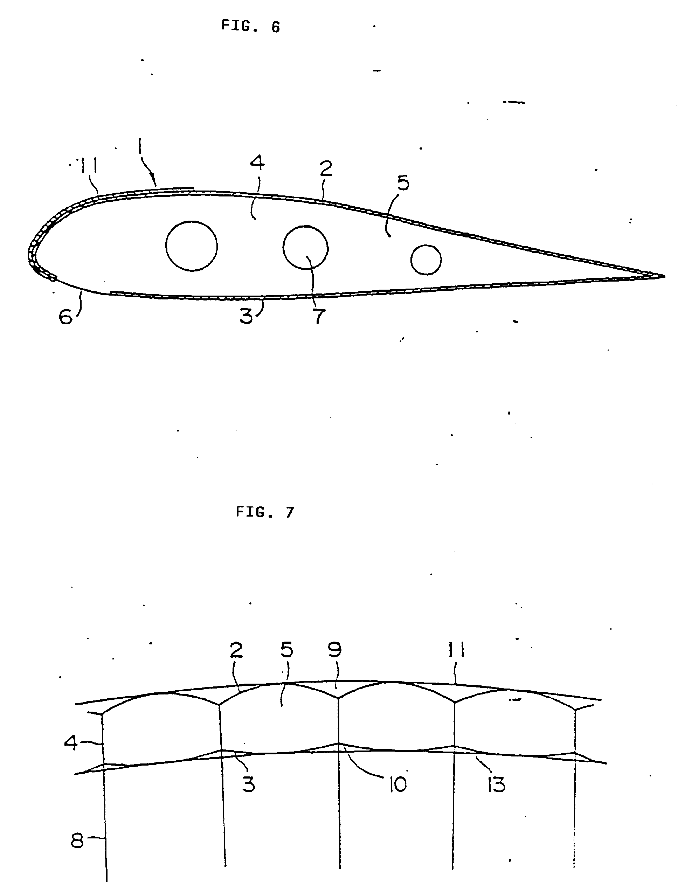

Fig. 7 shows a part of a paraglider which is another of the embodiments. Wing flatteners 11 and 13 are sewn to the upper and lower sides 2 and 3 of the wing of the paraglider at and near the front edges of the sides. The manner of the sewing of the wing flattener 11 to the upper side 2 is the same as the preceding embodiment shown in Figs. 1, 2, 3, 4, 5 and 6. The other wing flattener 13 is sewn to the lower side 3 as follows:
(A) Some mutually sewn portions of the lower side 3 and the wing flattener 13 are the parts of the lower side at the middle of the distance between the mutually adjacent ribs 4 of the wing 1 and the corresponding parts of the flattener.
(B) Other mutually sewn portions of the lower side 3 and the wing flattener 13 are the parts of the lower side at the right and left ends of the wing 1 and the parts of the flattener at the right and left ends thereof.
(C) Yet other mutually sewn portions of lower side 3 and the wing flattener 13 are the parts of the lower side and near the front edge of the thereof and the parts of the flattener at the front edge thereof.
(D) Yet other mutually sewn portions of the wing flattener 13 and the lower side 3 are the parts of the flattener at the rear edge thereof and the corresponding parts of the lower side.

As a result, not only the upper side 2 but also the lower side 3 are flattened when the paraglider files.

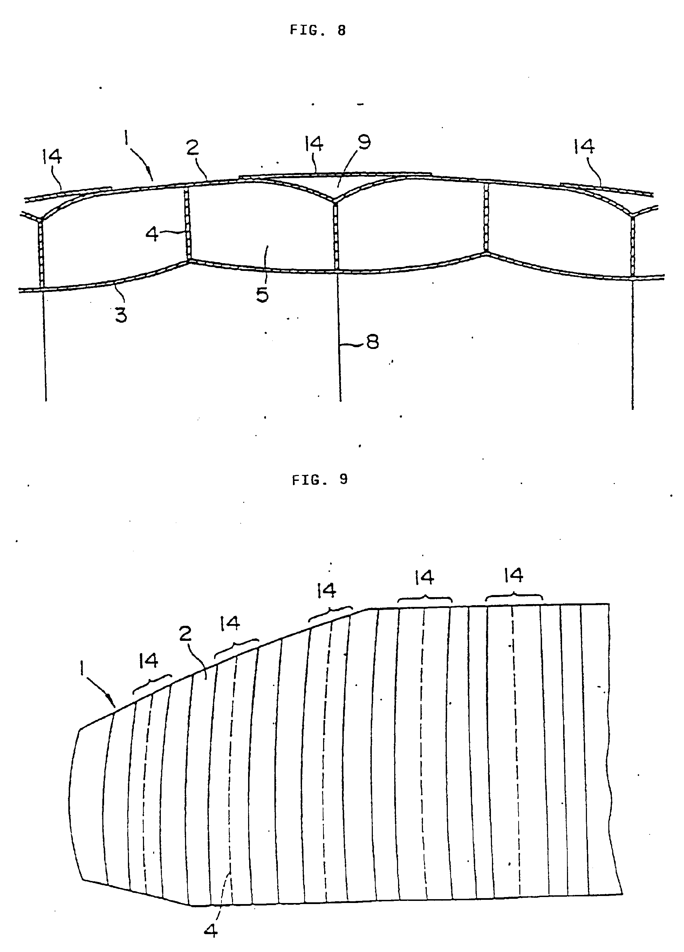

Figs. 8 and 9 show a part of a paraglider which is yet another of the embodiments. In the paraglider, a suspension line 8 is coupled to every other rib of the wing 1 of the paraglider. A plurality of wing flatteners 14 each made of a cloth of synthetic fibers and shaped as an oblong are provided on the wing 1 so as to cover recesses 9 made in the upper side 2 of the wing near the tops of the ribs 4 of the wing. Each of the wing flatteners 14 is sewn at the right and left side edges thereof to the upper side 2 near and between the ribs 4 not coupled to the suspension lines 8, and is also sewn at the rear end of the flattener to the upper side. This embodiment produces the same effect as the preceding ones.

Although the wing flatteners are sewn to the wings in the embodiments described above, the flatteners may be attached to the wings by a different means such as adhesion.

The surface of the wing of a paraglider provided in accordance with the present invention is flattened to smooth the flow of air on the surface to achieve the increase in the lift to the wing, the decrease in the resistance thereto, the improvement of the glide ratio of the paraglider, the decrease in the dynamic deformation of the wing and so forth to enhance the flying performance of the paraglider much more than that of the conventional paraglider. An excellent effect is thus produced.

## Claims

1. A paraglider comprising a wing (1) made of sheet material, which includes an upper side (2), a lower side (3), a plurality of ribs (4) provided between said sides to extend from one of said sides to the other, a plurality of wing chambers (5) defined among said sides and said ribs, and air intake ports (6) opened into said chambers at the front ends thereof; and suspension lines (8) coupled to some or all of said ribs, characterized in that said paraglider further comprises means (11,13,14) for covering recesses (9,10) which are formed in said upper side and/or said lower side and which extend in the front-to-rear direction of said wing, thereby flattening said wing.

2. The paraglider according to claim 1, wherein said covering means includes a wing flattener (11,13) made of sheet material and attached to said upper side or/and said lower side so as to cover said recesses.

3. The paraglider according to claim 1, wherein said covering means includes a wing flattener (11) nearly shaped as a band and made of a cloth of synthetic fibers, said wing flattener being sewn to said wing at and near the front edge of said upper side of said wing along the total length thereof.

4. The paraglider according to claim 1, wherein said covering means includes wing flatteners (11,13), each of which is shaped as a band and made of a cloth of synthetic fibers, said wing flatteners being sewn to said wing at and near the front edge of said upper and lower sides of said wing along the total length thereof, respectively.

5. The paraglider according to claim 1, wherein said covering means includes a plurality of wing flatteners (14), each made of a cloth of synthetic fibers and shaped as an oblong, each of said wing flatteners being attached to corresponding one of portions of said upper side and/or said lower side, where said recesses are formed, so as to cover said recesses.

## Patentansprüche

1. Gleitschirm mit einem aus Blattmaterial bestehenden Flügel (1), der eine Oberseite (2) umfaßt, eine Unterseite (3), eine Mehrzahl von Rippen (4), die zwischen diesen Seiten vorgesehen sind, um sich von einer dieser Seiten zu der anderen zu erstrecken, eine Mehrzahl von Flügelkammern (5), die zwischen diesen Seiten und den Rippen festgelegt sind, und Lufteinlaßöffnungen (6), die in die Kammern an ihren Vorderenden münden, und Trageleinen (8), die mit einigen oder sämtlichen der Rippen verbunden sind,
dadurch **gekennzeichnet,**
daß der Gleitschirm außerdem Mittel (11, 13, 14) umfaßt, um Vertiefungen (9, 10) zu bedecken, die in der Oberseite und/oder der Unterseite ausgebildet sind, und die sich in die Richtung des Flügels von vorne nach hinten erstrecken, wodurch der Flügel flachgedrückt wird.

2. Gleitschirm nach Anspruch 1, wobei das Bedeckungsmittel ein Flügelflachdrückteil (11, 13) umfaßt, das aus einem Blattmaterial besteht und an der Oberseite oder/und der Unterseite derart befestigt ist, daß die Vertiefungen bedeckt sind.

3. Gleitschirm nach Anspruch 1, wobei das Bedeckungsmittel ein Flügelflachdrückteil (11) umfaßt, das nahezu als Band ausgebildet ist und aus einem Stoff aus synthetischen Fasern besteht, wobei das Flügelflachdrückteil an den Flügel an sowie nahe der Vorderkante der Oberseite des Flügels entlang seiner gesamten Länge angenäht ist.

4. Gleitschirm nach Anspruch 1, wobei das Bedeckungsmittel Flügelflachdrückteile (11, 13) umfaßt, von denen jedes als ein Band ausgebildet ist und aus einem Stoff aus synthetischen Fasern besteht, wobei die Flügelflachdrückteile an den Flügel an sowie nahe der Vorderkante der Ober- und Unterseiten des Flügels entlang seiner gesamten Länge angenäht sind.

5. Gleitschirm nach Anspruch 1, wobei das Bedeckungsmittel eine Mehrzahl von Flügelflachdrückteilen (14) umfaßt, von denen jedes aus einem Stoff aus synthetischen Fasern besteht und länglich ausgebildet ist, wobei jedes der Flügelflachdrückteile an die entsprechenden Abschnitte der Oberseite und/oder der Unterseite dort befestigt sind, wo die Vertiefungen ausgebildet sind, um die Vertiefungen zu bedecken.

## Revendications

1. Parapente comprenant une voilure (1) formée d'une matière en feuille, qui comprend une face supérieure (2), une face inférieure (3), plusieurs nervures (4) disposées entre les faces et destinées à être placées de l'une des faces à l'autre, plusieurs chambres (5) de voilure délimitées entre les faces et les nervures, et des orifices (6) d'admission d'air qui débouchent dans les chambres à leurs extrémités avant, et des suspentes (8) couplées à certaines des nervures ou à la totalité des nervures, caractérisé en ce que le parapente comporte en outre un dispositif (11, 13, 14) destiné à recouvrir les cavités (9, 10) qui se forment à la face supérieure et/ou à la face inférieure et qui sont disposées dans la direction avant-arrière de la voilure, si bien que celle-ci est aplatie.

2. Parapente selon la revendication 1, dans lequel le dispositif de couverture comporte un organe (11, 13) d'aplatissement de voilure formé d'une matière en feuille et fixé à la face supérieure et/ou à la face inférieure afin qu'il recouvre les cavités.

3. Parapente selon la revendication 1, dans lequel le dispositif de couverture comprend un organe (11) d'aplatissement de voilure ayant pratiquement la forme d'une bande et formé d'une étoffe de fibres de synthèse, l'organe d'aplatissement de voilure étant cousu à la voilure au bord avant de la face supérieure de la voilure et près de ce bord avant sur toute sa longueur.

4. Parapente selon la revendication 1, dans lequel le dispositif de couverture comporte des organes (11, 13) d'aplatissement de voilure, ayant chacun une forme de bande et formés d'une étoffe de fibres de synthèse, les organes d'aplatissement de voilure étant cousus à la voilure au bord avant des faces supérieure et inférieure de la voilure et près de ce bord sur toute sa longueur, respectivement.

5. Parapente selon la revendication 1, dans lequel le dispositif de couverture comporte plusieurs organes (14) d'aplatissement de voilure formés chacun d'une étoffe de fibres de synthèse et ayant une configuration allongée, chacun des organes d'aplatissement de voilure étant fixé à une partie correspondante de la face supérieure et/ou de la face inférieure, à l'endroit où sont formées les cavités, afin qu'il recouvre les cavités.
